# EUROPEAN PATENT APPLICATION

(11) **EP 2 692 551 A1**
(43) Date of publication of application: **05.02.2014**
(21) Application number: 13178354.0
(22) Date of filing: 29.07.2013
(51) Int. Cl.: B60C 23/12

(54) **Bonding to a pneumatic tire**

(30) Priority: 30.07.2012 US 201213561155
(71) Applicant: The Goodyear Tire & Rubber Company, Akron, Ohio 44316 (US)
(72) Inventor: Frantzen, Andreas, D-54292 Trier (DE); Agostini, Giorgio, L-7733 Colmar-Berg (LU)
(74) Representative: Kutsch, Bernd

(57) **Abstract**

A pneumatic tire is disclosed comprising a cavity, a first and a second sidewall extending respectively from a first and a second tire bead region to a tire tread region, the first sidewall having at least one bending region operatively bending when radially within a rolling tire footprint; a sidewall groove (56) defined by groove walls positioned within the bending region of the first tire sidewall the sidewall groove (56) operatively deforming segment by segment between a non-deformed state and a deformed, constricted state in response to a bending of the bending region of the first sidewall while radially within the rolling tire footprint; an air passageway (43) defined by the sidewall groove or located within the sidewall groove (56) and operatively deforming segment by segment between an expanded condition and an at least partially collapsed condition in response to respective segment by segment deformation of the sidewall groove (56) when radially within the rolling tire footprint; and a rigid structure (42) wherein the rigid structure (42) is bonded to the tire by a layered thermoplastic material.

## Description

### Field of Invention

The invention relates generally to bonding parts to a pneumatic tire and, more specifically, to bonding parts of a pumping assembly to a pneumatic tire.

### Background of the Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependent upon the driver taking remedial action when warned to re-inflate a tire to recommended pressure. It is a desirable, therefore, to incorporate an air maintenance feature within a tire that will maintain air pressure within the tire in order to compensate for any reduction in tire pressure over time without the need for driver intervention.

### Summary of the Invention

The invention relates to a tire in accordance with claim 1 and to a method in accordance with claim 15.

Dependent claims refer to preferred embodiments of the invention.

In one aspect of the present invention, a pneumatic tire assembly may comprise: A tire having a pneumatic cavity; a rigid structure for facilitating operation of the tire assembly, the rigid structure being bonded to the tire by a layered thermoplastic material such that a stiffness gradient is created between the structure and the tire; first and second sidewalls extending respectively from first and second tire bead regions to a tire tread region, the first sidewall having at least one bending region operatively bending when radially within a rolling tire footprint; and a sidewall groove defined by groove walls positioned within the bending region of the first tire sidewall, the sidewall groove deforming segment by segment between a non-deformed state and a deformed, constricted state in response to bending of the bending region of the first sidewall while radially within the rolling tire footprint. An air passageway is defined by the sidewall groove and deforms segment by segment between an expanded condition and an at least partially collapsed condition in response to respective segment by segment deformation of the sidewall groove when radially within the rolling tire footprint.

According to one aspect of the invention, the thermoplastic material may be selected from the group consisting of polyethylene, polypropylene, polyamide, polyester, polyphenylene ether, and polyphthalamide.

According to another aspect of the invention, the thermoplastic material may be polyethylene.

According to yet another aspect of the invention, the rigid structure may further comprise an adhesive selected from the group consisting of an RFL adhesive and an epoxy-based adhesive.

According to still another aspect of the invention, the thermoplastic material may comprise a plurality of thermoplastic layers.

According to yet another aspect of the invention, the thermoplastic material may comprise a plurality of thermoplastic layers wherein the thermoplastic layers have a layer thickness ranging from 0.1 to 1 mm.

According to still another aspect of the invention, the thermoplastic material may comprise at least ten thermoplastic layers.

According to yet another aspect of the invention, the thermoplastic material may comprise a plurality of thermoplastic layers with an adhesive disposed between the thermoplastic layers.

According to still another aspect of the invention, the thermoplastic material may comprise at least ten thermoplastic layers with an adhesive disposed between the thermoplastic layers.

According to yet another aspect of the invention, the rigid structure may be constructed of ultra high molecular weight polyethylene.

According to still another aspect of the invention, the rigid structure and the tire may define a built-in tube-like cavity.

According to yet another aspect of the invention, the rigid structure and the tire preferably reroute pressurized air to a pump assembly, and from there, into the pneumatic cavity.

According to still another aspect of the invention, a separate tube may be disposed within the sidewall groove, the separate tube defining a circular air passageway.

According to yet another aspect of the invention, the separate tube preferably has an outer profile corresponding to an inner profile of the sidewall groove.

According to still another aspect of the invention, the rigid structure preferably comprises a plurality of check valves disposed at multiple arcuate positions about the sidewall groove.

According to still another aspect of the invention, a subcoat may be applied to a bare surface of the rigid structure and a topcoat may be applied to the subcoat.

According to still another aspect of the pneumatic tire assembly, the subcoat may be dried to the bare surface of the rigid structure for instance at 180C for 8 min.

### Definitions

"Axial" and "axially" means lines or directions that are parallel to the axis of rotation of the tire.

"Circumferential" means lines or directions extending along the perimeter of the surface of the annular tread perpendicular to the axial direction.

"Equatorial Centerplane (CP)" means the plane perpendicular to the tire's axis of rotation and passing through the center of the tread.

"Footprint" means the contact patch or area of contact of the tire tread with a flat surface at zero speed and under normal load and pressure.

"Lateral" means an axial direction.

"Peristaltic" means operating by means of wave-like contractions that propel contained matter, such as air, along tubular pathways.

"Radial" and "radially" means directions radially toward or away from the axis of rotation of the tire.

### Brief Description of the Drawings

The invention will be described by way of example and with reference to the accompanying drawings in which:
Fig-1; Schematic cross-sectional view of an example assembly in accordance with the present invention.
Fig-2; Side view of the example tire/tube assembly.
Fig-3A-3C; Details of an example outlet connector.
Fig-4A-4E; Details of an example inlet (filter) connector.
Fig-5A; Side view of an example tire rotating with air movement (84) to cavity.
Fig-5B; Side view of the example tire rotating with air flushing out filter.
Fig-6A; Section view taken from Fig-5A.
Fig-6B; Enlarged detail of tube area taken from Fig-6A, sidewall in non-compressed state.
Fig-7A; Section view taken from Fig-5A.
Fig-7B; Enlarged detail of tube area taken from Fig-7A, sidewall in compressed state.
Fig-8A; Enlarged detail of an example tube & groove detail taken from Fig-2.
Fig-8B; Detail showing an example tube compressed and being inserted into the groove.
Fig-8C; Detail showing an example tube fully inserted into the groove at a ribbed area of the groove.
Fig-8D; Exploded fragmented view of tube being inserted into a ribbed groove.
Fig-9; Enlarged detail taken from Fig-2 showing an example rib profile area located on both sides of the outlet to a cavity connector.
Fig-10A; Enlarged detail of the groove with the example rib profile.
Fig-10B; Enlarged detail of tube pressed into the example rib profile.
Fig-11; Enlarged detail taken from Fig-2 showing another example rib profile area located on both sides of the outlet to a cavity connector.
Fig-12A; Enlarged detail of the groove with the other example rib profile.
Fig-12B; Enlarged detail of the tube pressed into the other example rib profile.
Fig-13A; Enlarged view of another example tube & groove detail.
Fig-13B; Detail showing tube from Fig-13A being compressed and inserted into the groove.
Fig-13C; Detail showing the tube from Fig-13A fully inserted into the groove.
Fig-14A; Enlarged view of a third example tube & groove detail.
Fig-14B; Detail showing tube from Fig-14A being compressed and inserted into the groove.
Fig-14C; Detail showing the tube from Fig-14A fully inserted into the groove.
Fig-15A; Enlarged view of a fourth example tube & groove detail.
Fig-15B; Detail showing tube from Fig-15A being compressed and inserted into the groove.
Fig-15C; Detail showing the tube from Fig-15A fully inserted into the groove.

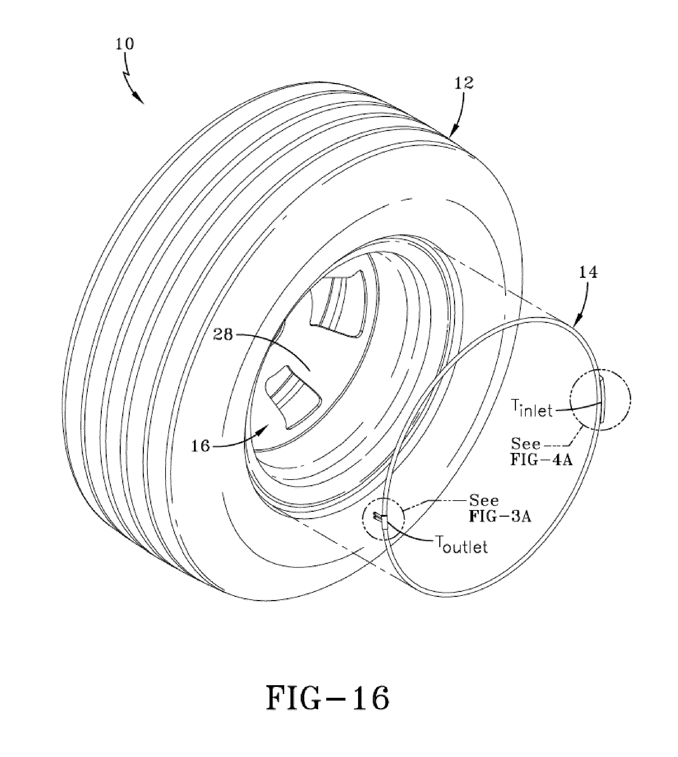

Fig. 16; Isometric exploded view of an example tire and tube assembly for use with the present invention.

### Detailed Description of Example Embodiments of the Present Invention

Referring to FIGS. 16, 2, and 6A, an example tire assembly 10 includes a tire 12, a peristaltic pump assembly 14, and a tire rim 16. The tire mounts in conventional fashion to a pair of rim mounting surfaces 18, 20 adjacent outer rim flanges 22, 24. The rim flanges 22, 24 each have a radially outward facing flange end 26. A rim body 28 may support the tire assembly 10 as shown. The tire 12 may be of conventional construction, having a pair of sidewalls 30, 32 extending from opposite bead areas 34, 36 to a crown or tire tread region 38. The tire 12 and rim 16 enclose a tire cavity 40.

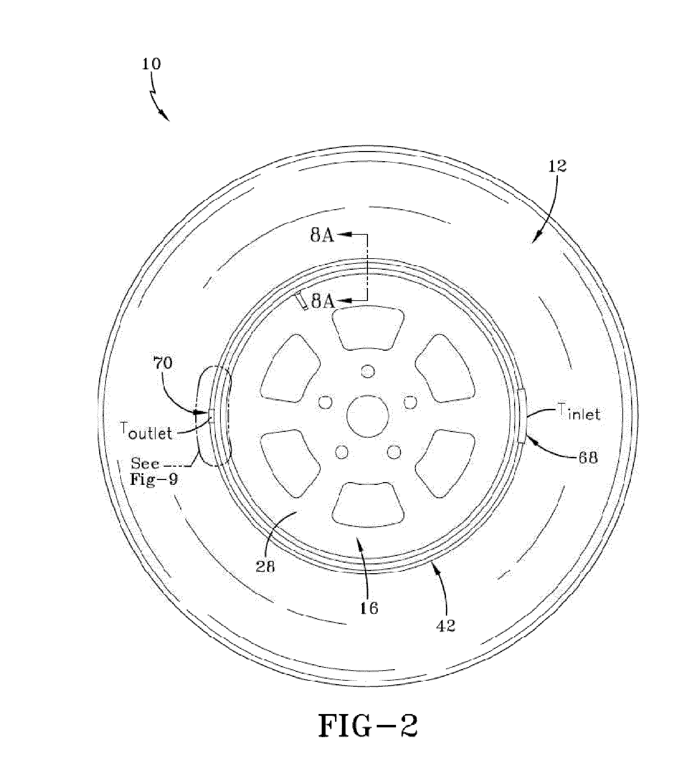

As seen from FIGS. 2 and 3A, 3B, 3C, 6B and 8A, the example peristaltic pump assembly 14 includes an annular air tube 42 that encloses an annular passageway 43. The tube 42 is formed of a resilient, flexible material such as plastic or rubber compounds that are capable of withstanding repeated deformation cycles of a flattened condition subject to external force and, upon removal of such force, returned to an original condition generally circular in cross-section. The tube 42 has a diameter sufficient to operatively pass a volume of air for purposes described herein and allowing a positioning of the tube in an operable location within the tire assembly 10 as will be described below. In the example configuration shown, the tube 42 may be an elongate, generally elliptical shape in cross-section, having opposite tube sidewalls 44, 46 extending from a flat (closed) trailing tube end 48 to a radiussed (open) leading tube end 50. The tube 42 may have a longitudinal outwardly projecting pair of locking detent ribs 52 of generally semi-circular cross-section and each rib extending along outward surfaces of the sidewalls 44, 46, respectively.

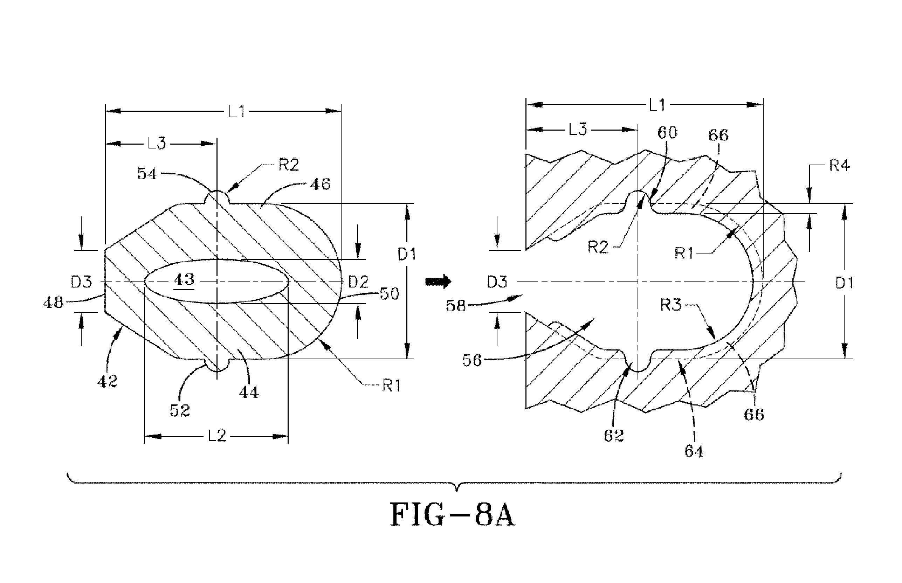

As referenced in FIG 8A, the tube 42 may have a length L1 within a range of 3.65 mm to 3.80 mm; a width of D1 within a range of 2.2 mm to 3.8 mm; a trailing end width of D3 within a range of 0.8 mm to 1.0 mm. The protruding detent ribs 52, 54 may each have a radius of curvature R2 within a range of 0.2 mm to 0.5 mm and each rib may be located at a position distance L3 within a range of 1.8 mm to 2.0 mm of the trailing tube end 48. The leading end 50 of the tube 42 may have a radius R1 within a range of 1.1 mm to 1.9 mm. The air passageway 43 within the tube 42 may likewise be generally elliptical with a length L2 within a range of 2.2 mm to 2.3 mm; and a width D2 within a range of 0.5 mm to 0.9 mm.

The tube 42 is profiled and geometrically configured for insertion into a groove 56. The groove 56 may have an elongate, generally elliptical configuration with a length L1 within a range of 3.65 mm to 3.80 mm complementary to the elliptical shape of the tube 42. The groove 56 may include a restricted narrower entryway 58 having a nominal cross-sectional width D3 within a range of 0.8 mm to 1.0 mm. A pair of groove-rib receiving axial detent channels 60, 62 of semi-circular configuration may be formed within opposite sides of the groove 56 for corresponding receipt of the tube locking ribs 52, 54, respectively. The channels 60, 62 may be spaced approximately a distance L3 within a range of 1.8 mm to 2.0 mm of the groove entryway 58. Detent channels 60, 62 may each have a radius of curvature R2 within a range of 0.2 mm to 0.5 mm. An inward detent groove portion 64 may be formed with a radius of curvature R1 within a range of 1.1 mm to 1.9 mm and a cross-sectional nominal width D1 within a range of 2.2 mm to 3.8 mm.

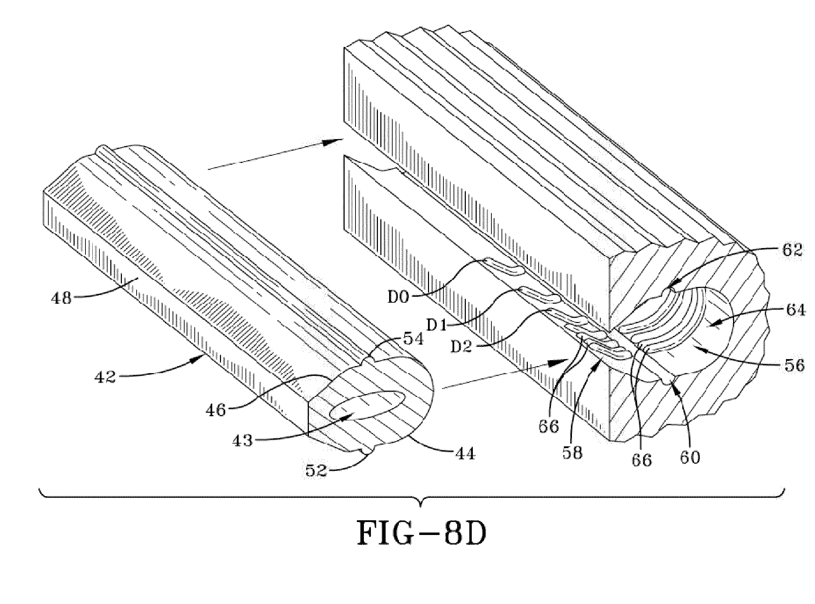

As best seen from FIGS. 8D, 9, 10A and 10B, the tire 12 may further form one or more compression ribs 66 extending the circumference of, and projecting into, the groove 56. The ribs 66 may form a pattern of ribs of prescribed pitch, frequency, and location, as described below. For the purpose of explanation, seven compression ribs may be referred to generally by numeral 66 in the first rib profile pattern shown, and specifically by the rib designations D0 through D6. The ribs D0 through D6 may be formed in a sequence and pitch pattern in order to optimize the pumping of air through the tube passageway 43. The ribs 66 may each have a unique and predetermined height and placement within the pattern and, as shown in FIG. 8D, project outward into the groove 56 at a radius R3 (FIG. 8A) within a range of 0.95 mm to 1.60 mm.

With reference to FIGS. 16, 2, 3A through 3C, and 4A through E, the peristaltic pump assembly 14 further includes an inlet device 68 and an outlet device 70 preferable spaced apart approximately 180 degrees at respective locations along the circumferential air tube 42. The example outlet device 70 has a T-shaped configuration in which conduits 72, 74 direct air to, and from, the tire cavity 40. An outlet device housing 76 contains conduit arms 78, 80 that integrally extend from respective conduits 72, 74. Each of the conduit arms 78, 80 have external coupling ribs 82, 84 for retaining the conduits within disconnected ends of the air tube 42 in the assembled condition. The housing 76 is formed having an external geometry that complements the groove 56 and includes a flat end 86, a radiused generally oblong body 88, and outwardly projecting longitudinal detent ribs 90. The housing 76 may thus be capable of close receipt into the groove 56 at its intended location with the ribs 90 registering within the groove 56 as represented in FIG. 8A.

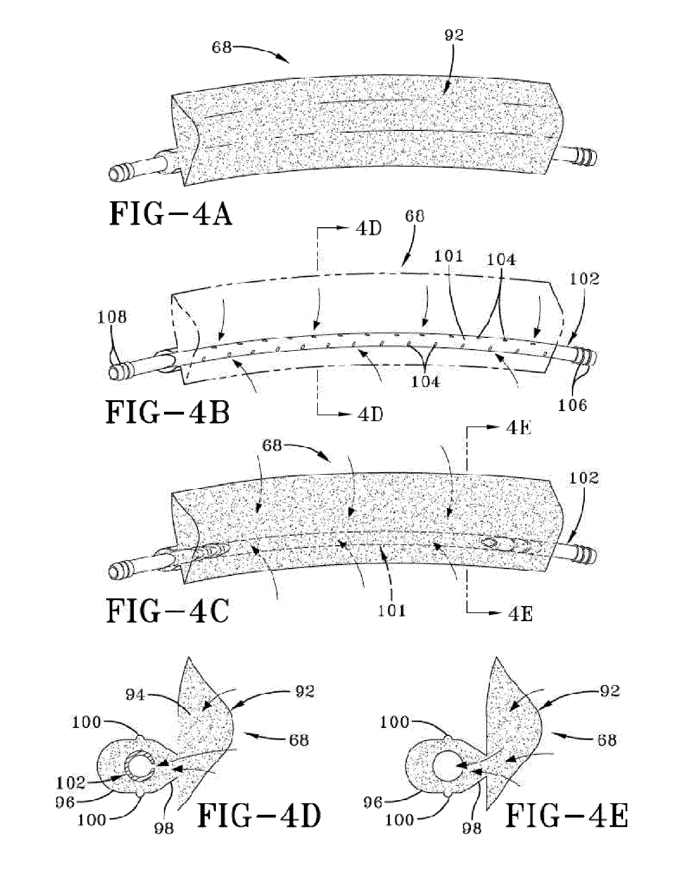

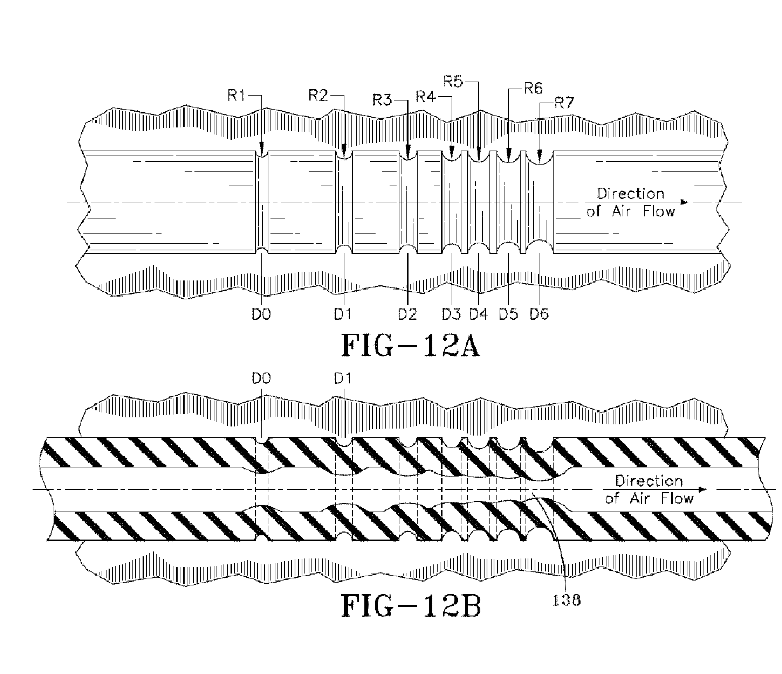

The inlet device 68, as seen in FIGS. 12, 4A through 4E, may include an elongate outward sleeve body 94 joining an elongate inward sleeve body 96 at a narrow sleeve neck 98. The outward sleeve body is generally triangular in section. The inward sleeve body 96 has an oblong external geometry complementary to the groove 56 and includes a pair of detent ribs 100 extending longitudinally along the inward sleeve body. An elongate air entry tube 101 is positioned within the inward sleeve body 96 and includes opposite tube ends 102 and a pattern of entry apertures 104 extending into a central tube passageway. External ribs 106, 108 secure the tube ends 102 in the air tube 42 opposite the outlet device 70.

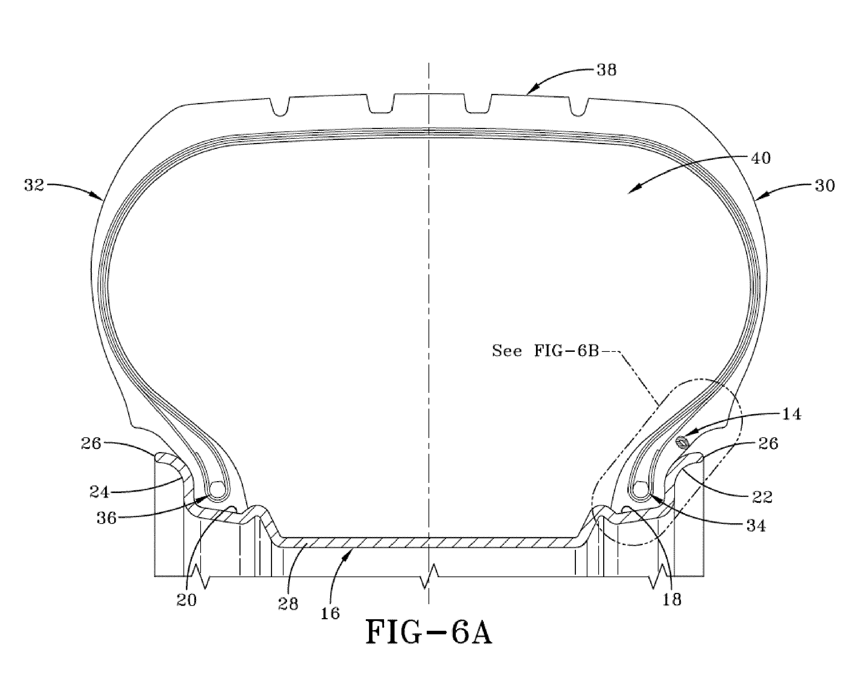

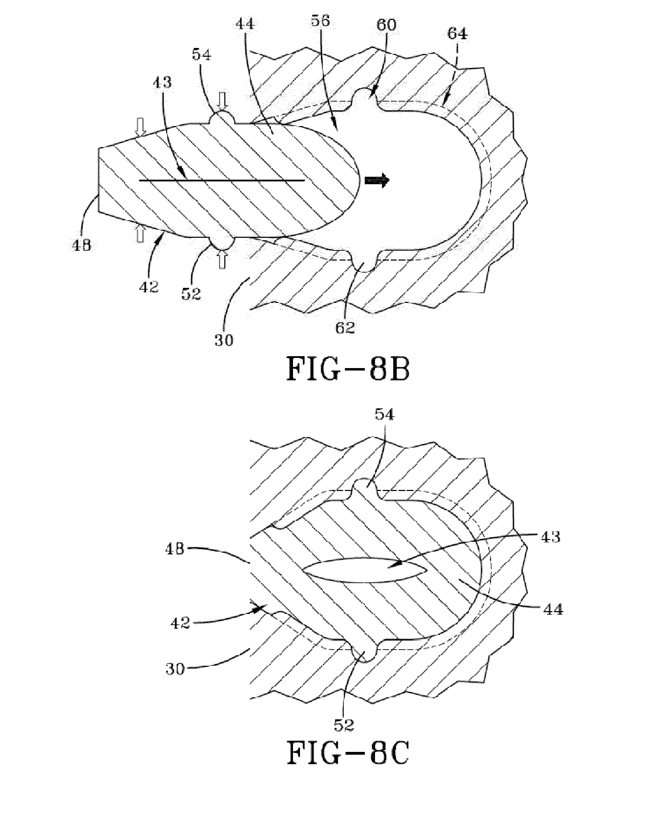

As shown in FIGS. 6A, 6B, 7A, 7B, 8A through D, the pump assembly 14 comprises the air tube 42 and inlet and outlet devices 68, 70 affixed in-line to the air tube at respective locations 180 degrees apart when inserted into the groove 56. The groove 56 may be located at a lower sidewall region of the tire 12 that, when the tire is mounted to the rim 16, positions the air tube 42 above the rim flange ends 26. FIG. 8B shows the air tube 42 diametrically squeezed and collapsed to accommodate insertion into the groove 56. Upon full insertion, as shown in FIG. 8C, the ribs 52, 54 may register within the groove channels 60, 62 and the flat outer end 48 of the tube 42 may be generally coplanar with the outer surface of the sidewall of the tire. Once fully inserted, the air passageway 43 of the tube 42 may elastically restore itself into an open condition to allow the flow of air along the tube during operation of the pump.

Referring to FIGS. 16, 2, 5A, 5B, 6A, 6B, 7A, 7B, 8A through 8D, the inlet device 68 and the outlet device 70 may be positioned within the circumference of the circular air tube 42 generally 180 degrees apart. The tire 12 with the tube 42 positioned within groove 56 rotates in a direction of rotation 110, causing a footprint 120 to be formed against the ground surface 118. A compressive force 124 is directed into the tire 12 from the footprint 120 and acts to flatten a segment of the air tube passageway 43 opposite the footprint 120, as shown at numeral 122. Flattening of a segment of the passageway 43 forces air from the segment along the tube passageway 43 in the direction shown by arrow 116, toward the outlet device 70.

As the tire 12 continues to rotate in the direction 110 along the ground surface 118, the tube 42 may be sequentially flattened or squeezed opposite the tire footprint, segment by segment, in a direction opposite to the direction 110. A sequential flattening of the tube passageway 43, segment by segment, may cause evacuated air from the flattened segments to be pumped in the direction 116 within tube passageway 43 toward the outlet device 70. Air may flow through the outlet device 70 and to the tire cavity 40, as shown at 130. At 130, air exiting the outlet device 70 may be routed to the tire cavity 40 and serve to re-inflate the tire 12 to a desired pressure level. A valve system to regulate the flow of air to the cavity 40, when the air pressure within the cavity falls to a prescribed level, is shown and described in pending US-A- 2011/0272073 incorporated herein by reference.

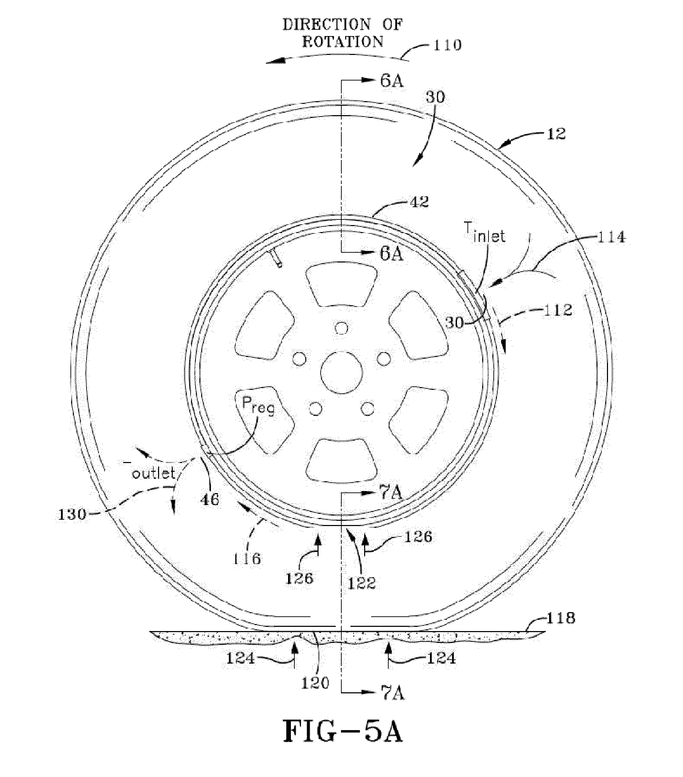

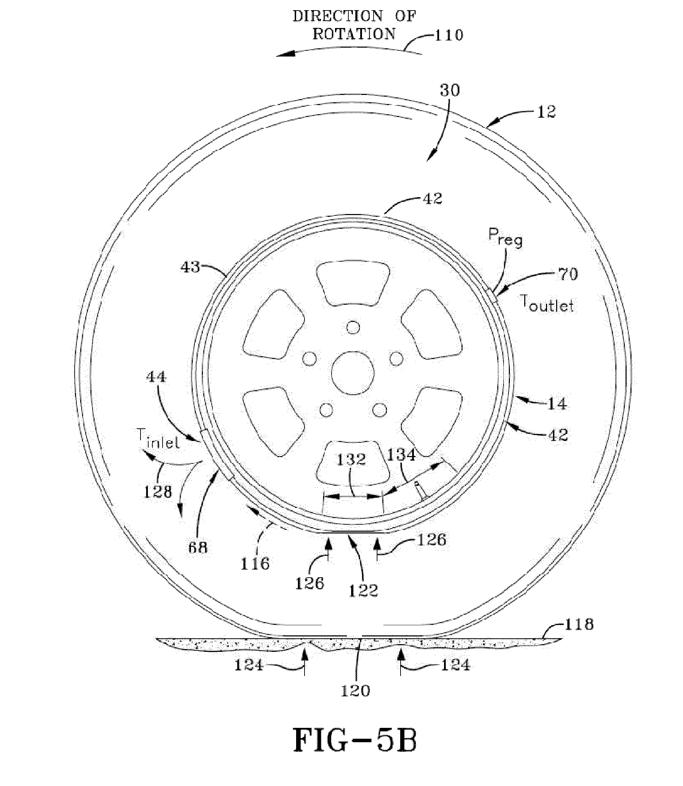

With the tire 12 rotating in direction 110, flattened tube segments may be sequentially refilled by air flowing into the inlet device 68 in the direction 114, as shown by FIG. 5A. The inflow of air into the inlet device 68, and then into the tube passageway 43, may continue until the outlet device 70, rotating in a counterclockwise direction 110, passes the tire footprint 120. FIG. 5B shows the orientation of the peristaltic pump assembly 14 in such a position. The tube 42 may continue to be sequentially flattened, segment by segment, opposite the tire footprint 120 by a compressive force 124. Air may be pumped in the clockwise direction 116 to the inlet device 68 and evacuated or exhausted external to the tire 12. Passage of exhaust air, as shown at 128, from the inlet device 68 may occur through a filter sleeve 92 exemplarily formed of a cellular or porous material or composite. Flow of air through the filter sleeve 92 and into the tube 101 may thus cleanse debris or particulates. In the exhaust or reverse flow of air direction 128, the filter sleeve 92 may be cleansed of trapped accumulated debris or particles within the porous medium. With the evacuation of pumped air out of the inlet device 68, the outlet device 70 may be in a closed position preventing air flow to the tire cavity 40. When the tire 12 rotates further in counterclockwise direction 110 until the inlet device 70 passes the tire footprint 120 (as shown in FIG. 5A), the airflow may resume to the outlet device and cause the pumped air to flow out and into the tire cavity 40. Air pressure within the tire cavity 40 may thus be maintained at a desired level.

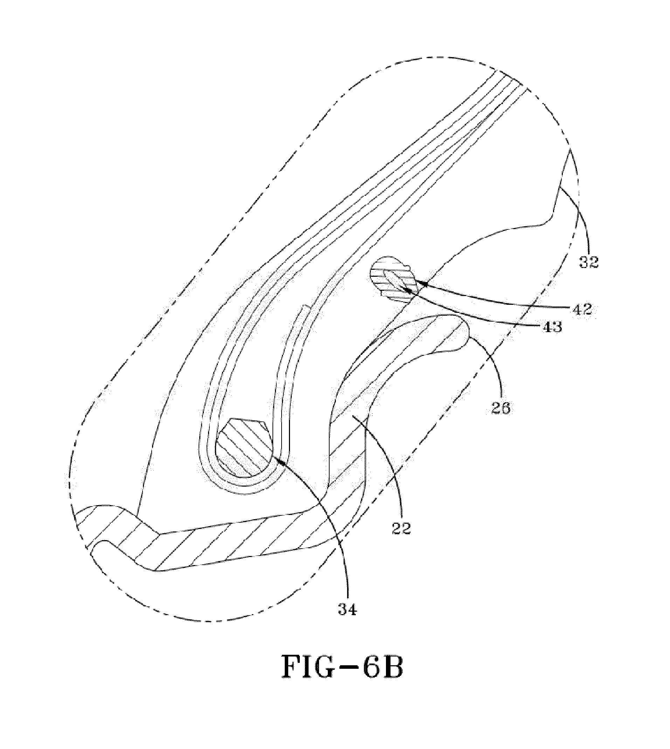

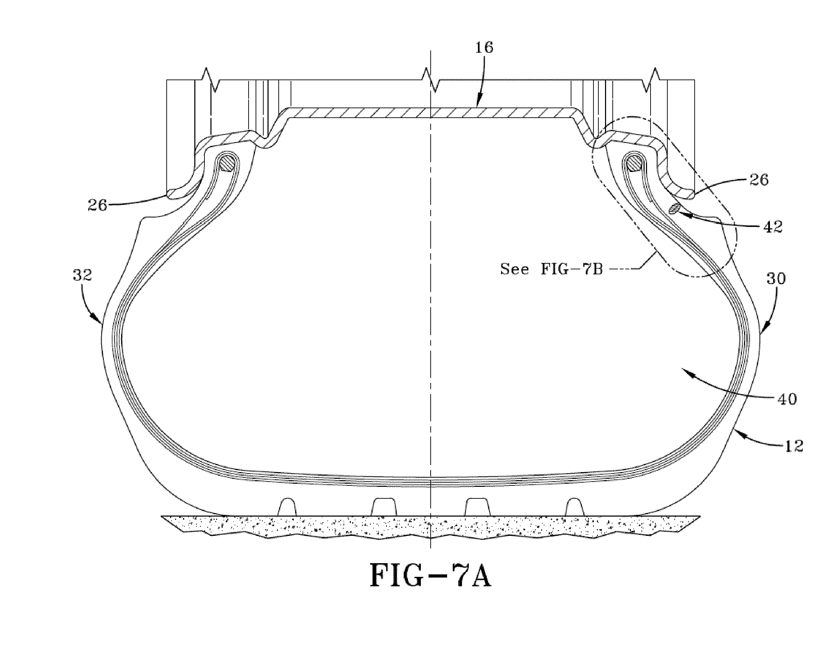

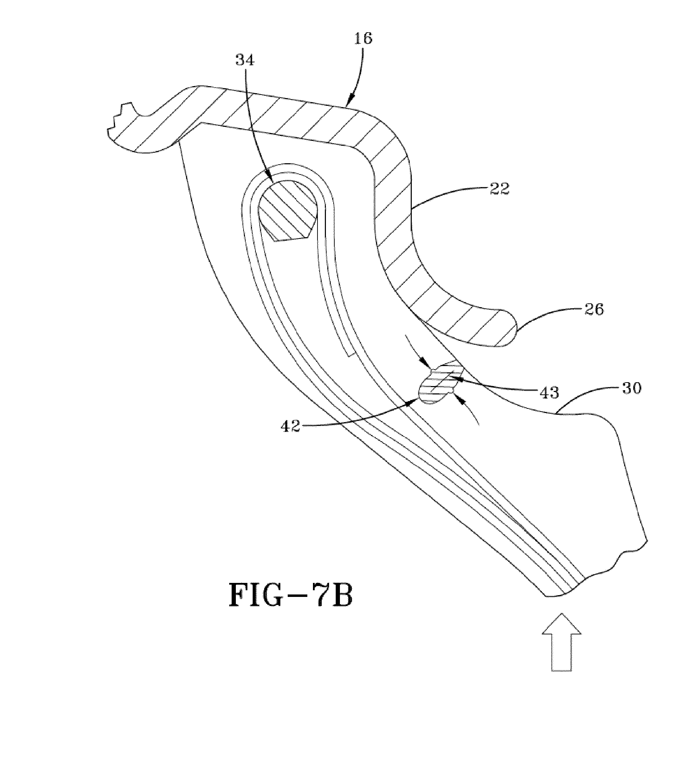

FIG. 5B illustrates that the tube 42 is flattened, segment by segment, as the tire 12 rotates in direction 110. A flattened segment 134 moves counterclockwise as it is rotated away from the tire footprint 120 while an adjacent segment 132 moves opposite the tire footprint and is flattened. Accordingly, the progression of squeezed or flattened or closed tube segments may be move air toward the outlet device 70 (FIG. 5A) or the inlet device 68 (FIG. 5B) depending on the rotational position of the tire 12 relative to such devices. As each segment is moved by tire rotation away from the footprint 120, the compression forces within the tire 12 from the footprint region may be eliminated and the segment may resiliently reconfigure into an unflattened or open condition as the segment refills with air from the passageway 43. FIGS. 7A and 7B show a segment of the tube 42 in the flattened condition while FIGS. 6A and 6B show the segment in an expanded, unflat or open configuration prior to, and after, moving away from a location opposite the tire footprint 120. In the original non-flattened configuration, segments of the tube 42 may resume the exemplary oblong generally elliptical shape.

The above-described cycle may repeat for each tire revolution, with half of each rotation resulting in pumped air moving to the tire cavity 40 and half of each rotation resulting in pumped air moving back out the filter sleeve 92 of the inlet device 68 for self-cleaning the filter. It may be appreciated that while the direction of rotation 110 of the tire 12 is as shown in FIGS. 5A and 5B is counterclockwise, the subject tire assembly 10 and its peristaltic pump assembly 14 may function in a like manner in a reverse (clockwise) direction of rotation as well. The peristaltic pump assembly 14 may accordingly be bi-directional and equally functional with the tire 12 and vehicle moving in a forward or reverse direction of rotation and forward or reverse direction of the vehicle.

The air tube/pump assembly 14 may be as shown in FIGS.5A, 5B, 6A, 6B, 7A and 7B. The tube 42 may be located within the groove 56 in a lower region of the sidewall 30 of the tire 12. The passageway 43 of the tube 42 may close by compression strain bending of the sidewall groove 56 within a rolling tire footprint 120, as explained above. The location of the tube 42 in the sidewall 30 may provide freedom of placement thereby avoiding contact between the tube 42 and the rim 16. Higher placement of the tube 42 in the sidewall groove 56 may use high deformation characteristics of this region of the sidewall as it passes through the tire footprint 120 to close the tube 42.

The configuration and operation of the grooved sidewalls, and in particular the variable pressure pump compression of the tube 42 by operation of ridges or compression ribs 66 within the groove 56 is shown in FIGS. 8A-8D, 9, 10A and 10B. The ridges or ribs are indicated by numeral 66 and individually as D0 through D6. The groove 56 may be uniform width circumferentially along the side of the tire 12 with the molded ridges D0 through D6 formed to project into the groove 56 in a preselected sequence, pattern, or array. The ridges D0 through D6 may retain the tube 42 in a predetermined orientation within the groove 56 and also may apply a variable sequential constriction force to the tube.

The uniformly dimensioned pump tube 42 may be positioned within the groove 56 as explained above - a procedure initiated by mechanically spreading the entryway D3 of the groove 56 apart. The tube 42 may then be inserted into the enlarged opening of the groove 56. The opening of the groove 56 may thereafter be released to return to close into the original spacing D3 and thereby capture the tube 42 inside the groove. The longitudinal locking ribs 52, 54 may thus be captured/locked into the longitudinal grooves 60, 62. The locking ribs 52, 54 resultingly operate to lock the tube 42 inside the groove 56 and prevent ejection of the tube from the groove 56 during tire operation/rotation.

Alternatively, the tube 42 may be press inserted into the groove 56. The tube 42, being of uniform width dimensions and geometry, may be manufactured in large quantities. Moreover, a uniform dimensioned pump tube 42 may reduce overall assembly time, material cost, and non-uniformity of tube inventory. From a reliability perspective, this results in less chance for scrap.

The circumferential ridges D0 through D6 projecting into the groove 56 may increase in frequency (number of ridges per axial groove unit of length) toward the inlet passage of the tube 42, represented by the outlet device 70. Each of the ridges D0 through D6 may have a common radius dimension R4 within a range of 0.15 mm to 0.30 mm. The spacing between ridges D0 and D1 may be largest, the spacing between D1 and D2 the next largest, and so on until the spacing between ridges D5 and D6 is nominally eliminated. While seven ridges are shown, more or fewer ridges may be deployed at various frequency along the groove 56.

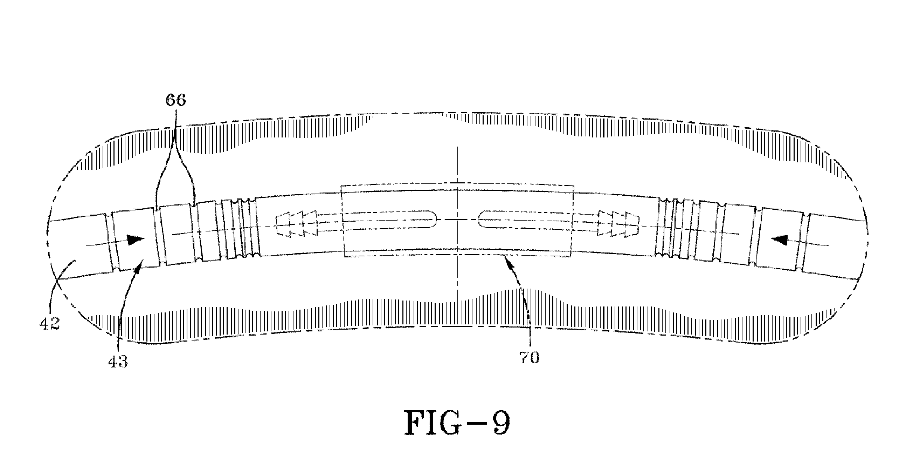

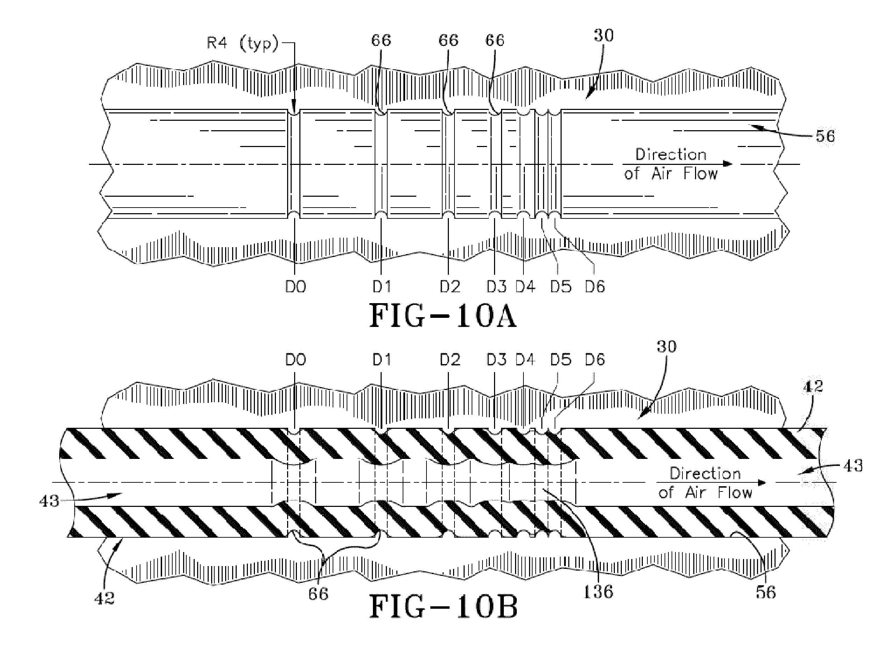

The projection of the ridges into the groove 56 by radius R4 may serve a twofold purpose. First, the ridges D0 through D6 may engage the tube 42 and prevent the tube from migrating, or "walking", along the groove 56 during tire operation/rotation from the intended location of the tube. Secondly, the ridges D0 through D6 may compress the segment of the tube 42 opposite each ridge to a greater extent as the tire 12 rotates through its rotary pumping cycle, as explained above. The flexing of the sidewall may manifest a compression force through each ridge D0 through D6 and may constrict the tube segment opposite such ridge to a greater extent than otherwise would occur in tube segments opposite non-ridged portions of the groove 56. As seen in FIGS. 10A and 10B, as the frequency of the ridges increases in the direction of air flow, a pinching of the tube passageway 43 may progressively occur until the passageway constricts to the size shown at numeral 136, gradually reducing the air volume and increasing the pressure. As a result, with the presence of the ridges, the groove 56 may provide variable pumping pressure within the tube 42 configured to have a uniform dimension therealong. As such, the sidewall groove 56 may be a variable pressure pump groove functioning to apply a variable pressure to a tube 42 situated within the groove. It will be appreciated that the degree of pumping pressure variation may be determined by the pitch or ridge frequency within the groove 56 and the amplitude of the ridges deployed relative to the diametric dimensions of the tube passageway 43. The greater the ridge amplitude relative to the diameter, the more air volume may be reduced in the tube segment opposite the ridge and pressure increased, and vice versa. FIG. 9 depicts the attachment of the tube 42 to the outlet device 70 and the direction of air flow on both sides into outlet device.

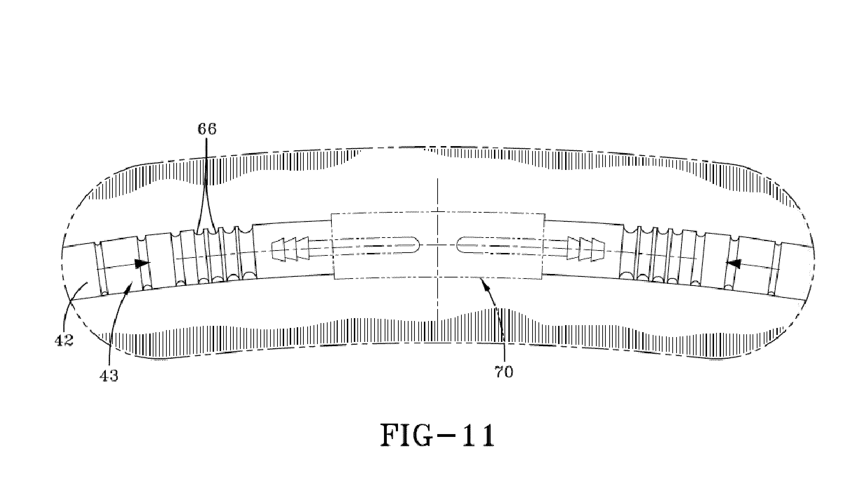

FIG. 11 shows a second alternative rib profile area located on both sides of the outlet to the outlet device 70. FIG. 12A shows an enlarged detail of the groove 56 with the alternative second rib profile and FIG. 12B shows an enlarged detail of the tube 42 pressed into the second rib profile. With reference to FIGS. 11, 12A, 12B, the ridges, or ribs, D0 through D6 in this alternative may have a frequency pattern similar to that described above in reference to FIGS. 10A, 10B, but with each rib having a unique respective amplitude as well. Each of the ribs D0 through D6 may generally have a semi-circular cross-section with a respective radius of curvature R1 through R7, respectively. The radii of curvatures of the ridges/ D0 through D6 may be within the exemplary range: Δ **=** 0.020 mm to 0.036 mm.

The number of ridges D0 through D6 and respective radii of each ridge may be constructed outside the above ranges to suit other dimensions or applications. The increasing radius of curvature in the direction of air flow may result in the ridges D0 through D6 projecting at an increasing amplitude and, to an increasing extent, into the passageway 43 toward the outlet device 70. As such, the passageway 43 may constrict to a narrower region 138 toward the outlet device 70 and cause a correspondingly greater increase in air pressure from a reduction in air volume. The benefit of such a configuration is that the tube 42 may be constructed smaller than otherwise necessary in order to achieve a desired air flow pressure along the passageway 43 and into the tire cavity 40 from the outlet device 70. A smaller sized tube 42 may be economically and functionally desirable in allowing a smaller groove 56 within the tire 12 to be used, thereby resulting a minimal structural discontinuity in the tire sidewall.

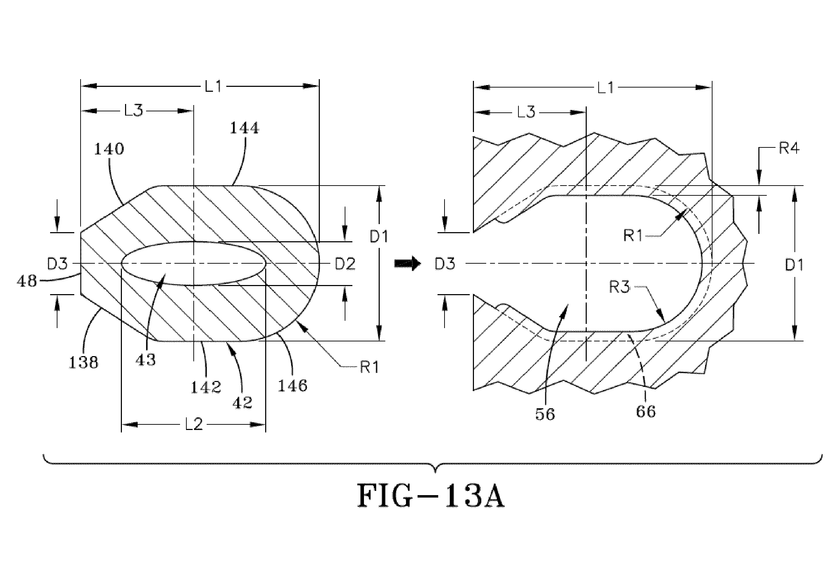

FIGS. 13A through 13°C show another tube 42 and groove 56 detail in which the detent ribs 90 of FIG. 8A through 8°C are eliminated as a result of rib and groove modification. This tube 42 may have an external geometry and passageway configuration with indicated dimensions within ranges specified as follows:
D1= 2.2 to 3.8 mm;
D2= 0.5 to 0.9 mm;
D3= 0.8 to 1.0 mm;
R4= 0.15 to 0.30 mm;
L1= 3.65 to 3.8 mm;
L2= 2.2 to 2.3 mm;
L3=1.8 to 2.0 mm.

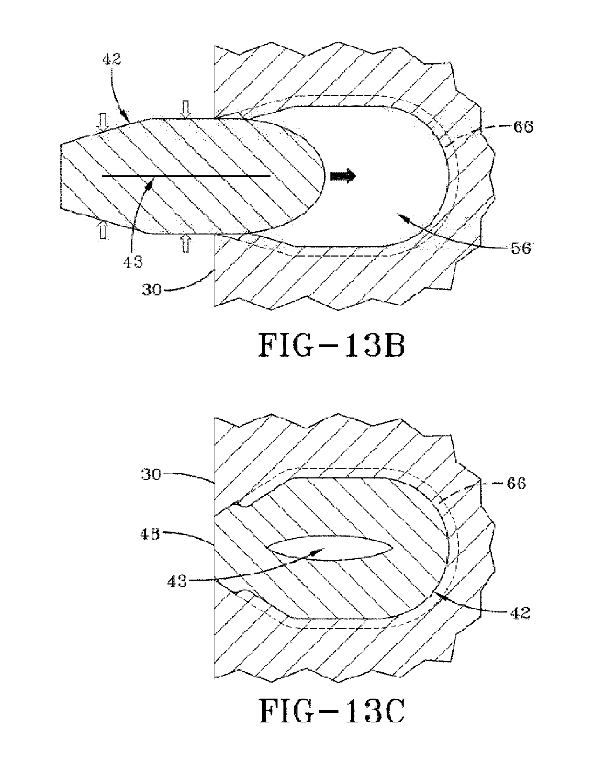

The above ranges may be modified to suit a particular dimensional preference, tire geometry, or tire application. The external configuration of the tube 42 may include beveled surfaces 138, 140 adjoining the end surface 48; parallel and opposite straight intermediate surfaces 142, 144 adjoining the beveled surfaces, respectively; and a radiused nose, or forward surface 146, adjoining the intermediate surfaces 142, 144. As seen from FIGS. 13B and 13C, the tube 42 may be compressed for press insertion into the groove 56 and, upon full insertion, expand. The constricted opening of the groove 56 at the sidewall surface may retain the tube 42 securely within the groove 56.

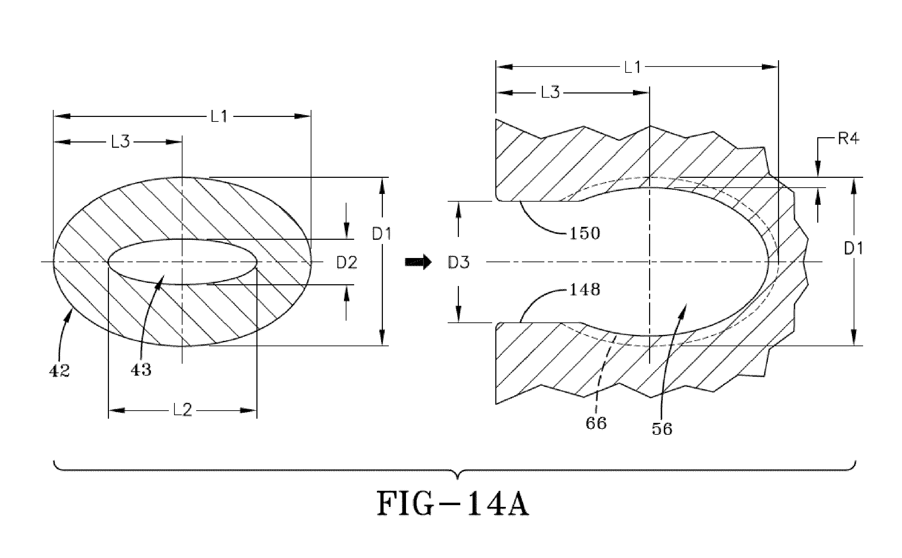

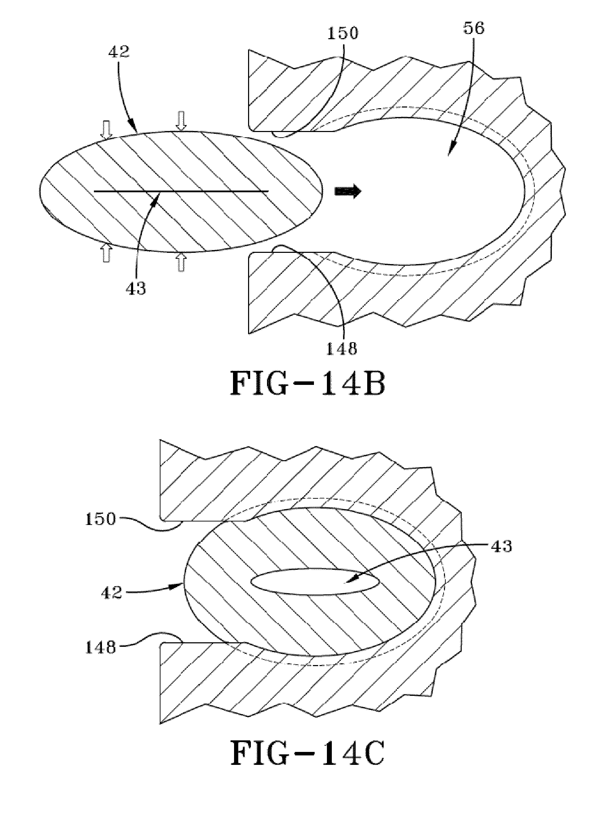

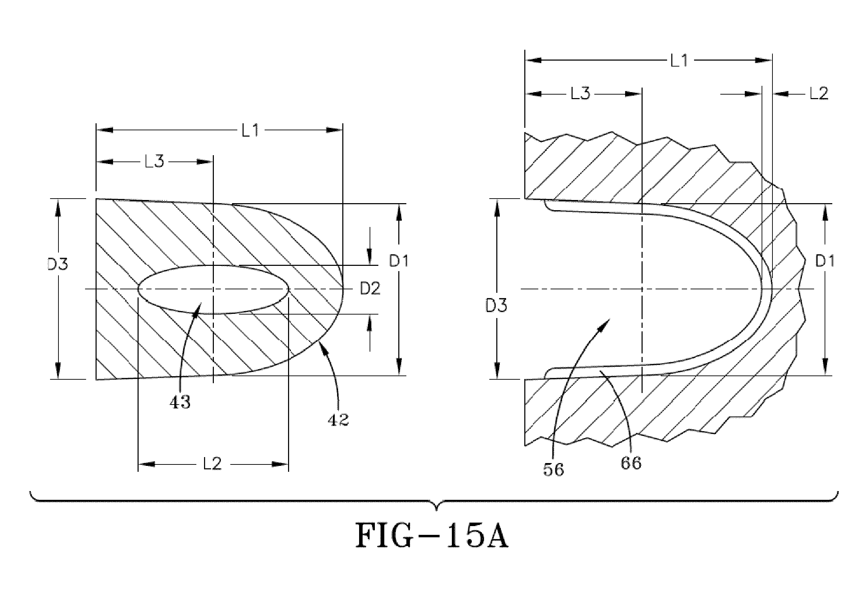

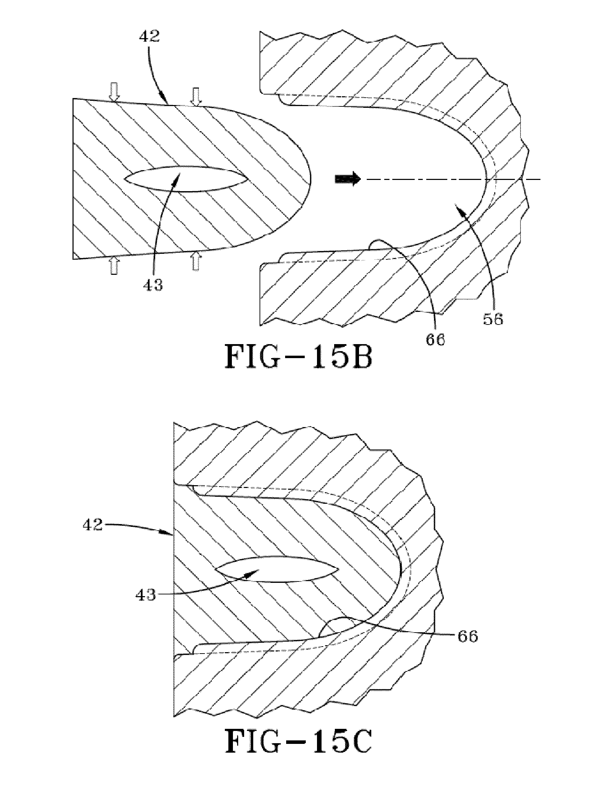

FIGS. 14A through 14C show another tube 42 and groove 56 configuration. FIG. 14A is an enlarged view and 14B is a detailed view showing the tube 42 compressed and inserted into the groove 56. FIG. 14C is a detailed view showing the tube 42 fully inserted into the groove 56. The tube 42 may be generally elliptical in cross-section inserting into a like-configured groove 56. The groove 56 may have a narrow entryway formed between opposite parallel surfaces 148, 150. In FIGS. 14A through 14C, the tube 42 is configured having an external geometry and passageway configuration with dimensions within the ranges specified as follows:
D1= 2.2 to 3.8 mm;
D2= 0.5 to 0.9 mm;
D3=0.8 to 1.0 mm;
R4= 0.15 to 0.30 mm;
L1= 3.65 to 3.8 mm;
L2= 2.2 to 2.3 mm;
L3= 1.8 to 2.0 mm.
The above ranges may be modified to suit a particular dimensional preference, tire geometry, or tire application. FIGS. 15A through 15°C show another tube 42 and groove 56 configuration. FIG. 15A is an enlarged view and FIG. 15B is a detailed view showing the tube 42 compressed and inserted into the groove 56. FIG. 15°C is a detailed view showing the tube 42 fully inserted into the groove 56. The tube 42 may be generally have a parabolic cross-section for inserting into a like-configured groove 56. The groove 56 may have an entryway sized to closely accept the tube 42 therein. The ridges 66 may engage the tube 42 once inserted into the groove 56. In FIGS. 15A through 15°C, the tube 42 has an external geometry and passageway configuration with dimensions within the ranges specified as follows:
D1= 2.2 to 3.8 mm;
D2= 0.5 to 0.9 mm;
D3= 2.5 to 4.1 mm;
L1= 3.65 to 3.8 mm;
L2= 2.2 to 2.3 mm;
L3= 1.8 to 2.0 mm.
The above ranges may be modified to suit a particular dimensional preference, tire geometry, or tire application if desired.

From the forgoing, it will be appreciated that the example assembly comprises a bi-directionally peristaltic pump assembly 14 for air maintenance of a tire 12. The circular air tube 42 flattens, segment by segment, and closes in the tire footprint 100. The air inlet device 68 preferably includes an outer filter sleeve 92 formed of porous cellular material and thereby render the air inlet device 68 self-cleaning. The outlet device 70 may employ a valve unit (see US-A-2011/0272073, incorporated herein by reference). The peristaltic pump assembly 14 may pump air through rotation of the tire 12 in either direction, one half of a revolution pumping air to the tire cavity 40 and the other half of a revolution pumping air back out of the inlet device 68. The peristaltic pump assembly 14 may be used with a secondary tire pressure monitoring system (TPMS) (not shown) that may serve as a system fault detector. The TPMS may be used to detect any fault in the self-inflation system of the tire assembly 10 and alert the user of such a condition.

The tire air maintenance system 10 may further incorporate a variable pressure pump groove 56 with one or more inwardly directed ridges or ribs 66 engaging and compressing a segment of the air tube 42 opposite such rib(s). The pitch or frequency of the ribs may increase toward the outlet device 70 for gradually reducing air volume within the passageway 43 by compressing the tube 42. The reduction in air volume may increase air pressure within the passageway 43 and thereby facilitate a more efficient air flow from the tube 42 into the tire cavity 40. The increase in tube pressure may be achieved by engagement by the ribs 66 of the groove 56 and the tube 42 having uniform dimensions along the tube length. The tube 42 may thus be made of uniform dimension and of relatively smaller size without compromising the flow pressure of air to the tire cavity 40 for maintaining air pressure. The pitch and amplitude of the ridges 66 may both be varied to better achieve the desired pressure increase within the passageway 43.

Structures in a pneumatic tire may require the embedding of certain rigid parts, functional devices, and/or connectors into adhering onto the rubber of the tire. For example, the structures 14, 42, 68, 70, 101, 202 of the example air maintenance tire 12 described above may require embedding/adherence. Such structures 14, 42, 68, 70, 101, 202 typically encounter high stresses during operating conditions of the tire 10. Thus, strong bonding of such structures 14, 42, 68, 70, 101, 202 is desired since a bond break at the structure's 14, 42, 68, 70, 101, 202, etc. surface will likely lead to destruction of the assembly 14 and/or the integrity of the tire 12 as a whole.

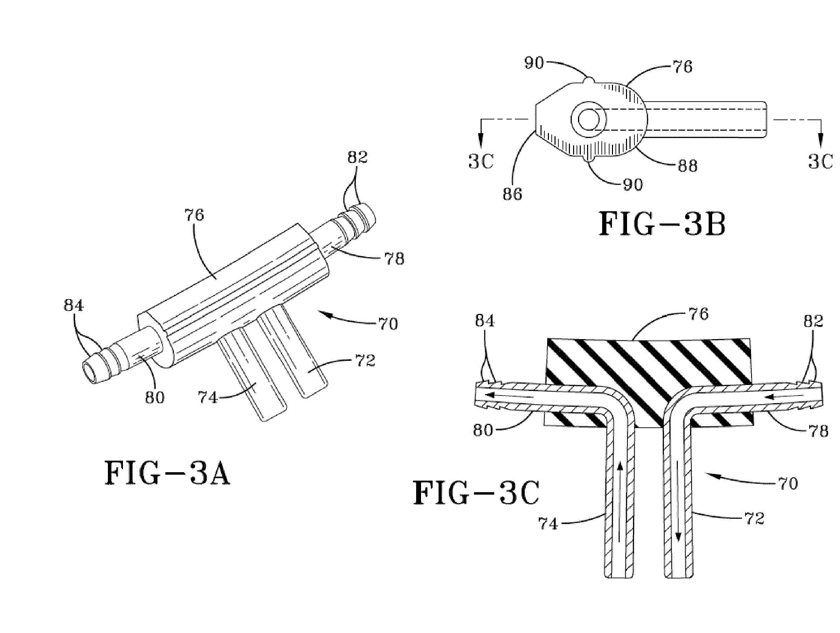

For example, an ultra high molecular weight polyethylene (UHMWPE) elbow-like structure 70 may be bonded to a tire 12 in order to define a built-in tube-like cavity (FIG. 3C). This structure 70 may thereby allow rerouting of pressurized air to a pump assembly 14 and from there, into a tire cavity 40, as well as to make a connection to the outside for providing fresh unpressurized air to the pump assembly.

In order to optimally bond such structures 14, 42, 68, 70, 101 to a tire 12, UHMWPE structures 14, 42, 68, 70, 101, 202 may be used. UHMWPE is similar to standard polyethylene, but has viscous flow shifted to significantly higher temperatures due to the much higher molecular weight and/or chain length. Thus, UHMWPE may bond at its surface to rubber at elevated temperatures through polymer chain entanglement, without losing its initial shape. The UHMWPE structures 14, 42, 68, 70, 101, 202, as well as any other build-in connectors inserts, and rigid parts, may be pressure sintered and machined from bulk and bonded to the tire 12. This bonding may reduce complexity and cost.

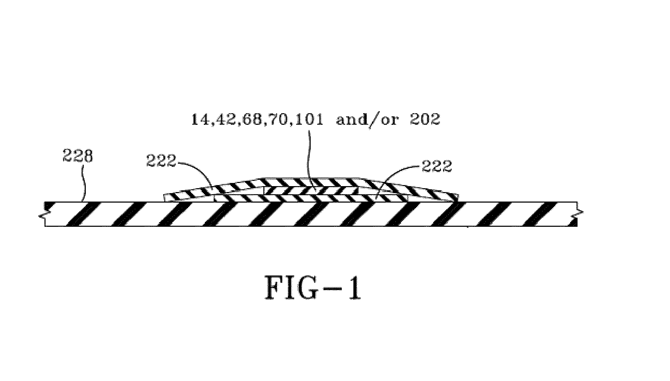

An example UHMWPE structure 14, 42, 68, 70, 101, 202 in accordance with the present invention is shown in cross-section in FIG. 1, with a plurality of layers of tape 222 disposed on a surface 228. The layers 222 may be stacked and overlapped in such a manner as to form a desired bond strength. The layers of tape 222 may be fused by application of heat during cure of a tire 12, or by action of an adhesive applied to tape 222. With the present method, the relatively thin tape 222 allows easy handling and application of the thermoplastic during tire building without need for thermal softening.

Suitable thermoplastic materials for use as the tape 222 may include polyolefin such as polyethylene and polypropylene; polyamides such as nylon 6, nylon 6,6; nylon 6,12; polyesters such as polyethylene terephthalate (PET) and polybutylene terephthalate (PBT); polyphenylene ether (PPE); polyphthalamide (PPA); and the like. Suitable thermoplastic materials preferably have a melting temperature greater than the temperatures experienced during operating conditions of the tire 12. The thermoplastic material preferably has a melting temperature greater than 160°C or a melting temperature greater than 130°C. The thermoplastic material may be treated on its surface with an adhesive to promote adhesion between the layers of tape 222 and the adhesion between the tape 222 and the adjacent UHMWPE structures 14, 42, 68, 70, 101, 202. The tape 222 may be dipped in an RFL (resorcinol-formaldehyde-latex) type adhesive, an epoxy-based adhesive, and/or a combination of RFL and epoxy-based adhesives. The adhesive, if used, may then be disposed between the layers of tape 22 in the UHMWPE structure 14, 42, 68, 70, 101, 202. Other components of the tire 12 may be made from rubber compositions with rubbers or elastomers containing olefinic unsaturation. The phrase "rubber or elastomer containing olefinic unsaturation" is intended to include both natural rubber and its various raw and reclaim forms, as well as various synthetic rubbers.

Representative synthetic polymers may be the homopolymerization products of butadiene and its homologues and derivatives, for example, methyl butadiene, dimethylbutadiene and pentadiene, as well as copolymers such as those formed from butadiene or its homologues or derivatives with other unsaturated monomers. Among the latter may be acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones, and ethers (e.g., acrolein, methyl isopropenyl ketone , and/or vinylethyl ether). Specific examples of synthetic rubbers may include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile, and/or methyl methacrylate, as well as ethylene/propylene terpolymers (also known as ethylene/propylene/diene monomer (EPDM)), and/or ethylene/propylene/ dicyclopentadiene terpolymers. Additional examples of rubbers which may be used include alkoxy-silyl end functionalized solution polymerized polymers (SBR, PBR, IBR, and/or SIBR), silicon-coupled and tin-coupled star-branched polymers. Rubber and/or elastomers may be polybutadiene and SBR.

The rubber may be at least two diene based rubbers. For example, a combination of two or more rubbers may be cis 1,4-polyisoprene rubber (natural or synthetic), 3,4-polyisoprene rubber, styrene/isoprene/butadiene rubber, emulsion and solution polymerization derived styrene/butadiene rubbers, cis 1,4-polybutadiene rubbers, and emulsion polymerization prepared butadiene/acrylonitrile copolymers. An emulsion polymerization derived styrene/butadiene (E-SBR) may be used having a styrene content of 20% to 28% bound styrene or, for some applications, an E-SBR having a medium to relatively high bound styrene content (e.g., a bound styrene content of 30% to 45%).

The term "phr" as used herein, may refer to "parts by weight of a respective material per 100 parts by weight of rubber or elastomer."

It may be understood by those having skill in the art that the rubber composition is compounded by methods known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. Depending on the intended use of the sulfur vulcanizable and sulfur-vulcanized material (rubbers), the additives may be selected and used in suitable amounts.

## Claims

1. A pneumatic tire comprising:
a cavity (40), a first and a second sidewall (30, 32) extending respectively from a first and a second tire bead region (34, 36) to a tire tread region (38), the first sidewall having at least one bending region operatively bending when radially within a rolling tire footprint (120);
a sidewall groove (56) defined by groove walls positioned within the bending region of the first tire sidewall (30), the sidewall groove (56) operatively deforming segment by segment between a non-deformed state and a deformed, constricted state in response to a bending of the bending region of the first sidewall (30) while radially within the rolling tire footprint (120);
an air passageway (43) defined by the sidewall groove or located within the sidewall groove (56) and operatively deforming segment by segment between an expanded condition and an at least partially collapsed condition in response to respective segment by segment deformation of the sidewall groove (56) when radially within the rolling tire footprint (120); and
a rigid structure (14, 42, 68, 70, 101) wherein the rigid structure (14, 42, 68, 70, 101) is bonded to the tire (12) by a layered thermoplastic material (222).

2. The pneumatic tire of claim 1 wherein the thermoplastic material (222) is selected from the group consisting of polyethylene, polypropylene, polyamide, polyester, polyphenylene ether, and polyphthalamide.

3. The pneumatic tire of claim 1 or 2 wherein the rigid structure (14, 42, 68, 70, 101) comprises or is coated with an adhesive selected from the group consisting of an RFL adhesive and an epoxy-based adhesive.

4. The pneumatic tire of at least one of the previous claims wherein the layered thermoplastic material (222) comprises a plurality of thermoplastic layers such as at least ten thermoplastic layers.

5. The pneumatic tire of claim 1 or 4 wherein the thermoplastic layer (222) or the thermoplastic layers each have a layer thickness ranging of from 0.1 to 1 mm.

6. The pneumatic tire of at least one of the previous claims wherein the thermoplastic material comprises a plurality of thermoplastic layers such as at least ten thermoplastic layers with an adhesive disposed between the thermoplastic layers.

7. The pneumatic tire of at least one of the previous claims wherein the rigid structure (14, 42, 68, 70, 101) is constructed of polyamide or an ultra high molecular weight polyethylene.

8. The pneumatic tire as set forth in at least one of the previous claims wherein the rigid structure (14, 42, 68, 70, 101) and the tire (12) define a built-in tube-like cavity.

9. The pneumatic tire as set forth in at least one of the previous claims wherein the rigid structure (14, 42, 68, 70, 101) and the tire (12) reroute pressurized air to a pump assembly and from there, into the cavity (40).

10. The pneumatic tire as set forth in at least one of the previous claims further including a subcoat applied to a surface or bare surface of the rigid structure (14, 42, 68, 70, 101) and, optionally, a topcoat applied to the subcoat.

11. The pneumatic tire as set forth in claim 10 or 11 wherein the layered thermoplastic material (222) is applied to the topcoat or to the subcoat.

12. The pneumatic tire as set forth in at least one of the previous claims further including a separate tube (42) within the sidewall groove (56), the separate tube defining a circular air passageway, the separate tube (42) preferably having an outer profile corresponding to an inner profile of the sidewall groove (56).

13. The pneumatic tire as set forth in at least one of the previous claims wherein the rigid structure comprises a plurality of check valves disposed at multiple arcuate positions about the sidewall groove (56).

14. The pneumatic tire as set forth in at least one of the previous claims wherein the tire is a self-inflating tire.

15. A method of manufacturing a pneumatic tire, the method comprising:
providing a tire (12) having a cavity (40), a first and a second sidewall (30, 32) extending respectively from a first and a second tire bead region (34, 36) to a tire tread region (38), the first sidewall having at least one bending region operatively bending when radially within a rolling tire footprint (120), a sidewall groove (56) defined by groove walls positioned within the bending region of the first tire sidewall (30), the sidewall groove (56) operatively deforming segment by segment between a non-deformed state and a deformed, constricted state in response to a bending of the bending region of the first sidewall (30) while radially within the rolling tire footprint (120), an air passageway (43) defined by the sidewall groove or located within the sidewall groove (56) and operatively deforming segment by segment between an expanded condition and an at least partially collapsed condition in response to respective segment by segment deformation of the sidewall groove (56) when radially within the rolling tire footprint (120);
providing a rigid structure (14, 42, 68, 70, 101) for bonding the rigid structure (14, 42, 68, 70, 101) to the tire (12); and
bonding the rigid structure (14, 42, 68, 70, 101) to the tire (12) by a layered thermoplastic material (222).
